# DEMANDE DE BREVET EUROPEEN

(11) **EP 3 453 570 A1**
(43) Date de publication de la demande: **13.03.2019**
(21) Numéro de dépôt: 18193745.9
(22) Date de dépôt: 11.09.2018
(51) Int. Cl.: B60Q 1/02, B60Q 1/06, B60Q 1/24, F21V 14/00, B60Q 1/14, B60Q 1/00, B60W 50/08, B60W 50/14, F21S 43/00

(54) **PERSONNALISATION D'UNE FONCTION DE MARQUAGE AU SOL**

(30) Priorité: 12.09.2017 FR 1758407
(71) Demandeur: Valeo Vision, 93012 Bobigny Cedex (FR)
(72) Inventeur: HUE, David, 93012 BOBIGNY Cedex (FR)
(74) Mandataire: Valeo Vision

(57) **Abrégé**

L'invention concerne un procédé de personnalisation d'au moins un paramètre d'une fonction de marquage au sol d'un système lumineux d'un véhicule automobile, le procédé comprenant les étapes suivantes :
- pilotage (202) du système lumineux à partir d'une valeur initiale d'au moins un paramètre d'une fonction de marquage au sol ;
- affichage (203) d'une interface graphique pour le contrôle du paramètre de la fonction de marquage au sol ;
- sur réception (204) d'une commande de modification du paramètre, adaptation (205) en temps réel du pilotage de la fonction de marquage au sol en fonction de la commande de modification

## Description

La présente invention concerne le domaine de l'assistance à la conduite, en particulier à la conduite d'un véhicule automobile, notamment via une fonction de marquage au sol d'un système lumineux du véhicule automobile. Elle vise notamment la personnalisation de paramètres d'une telle fonction.

Elle trouve des applications dans le contrôle de systèmes lumineux tels que des dispositifs de projection de véhicule automobile dans des applications d'éclairage et/ou de signalisation. Un tel système lumineux peut intégrer des projecteurs, ou phares, du véhicule automobile, afin d'illuminer la route, devant le véhicule, la nuit ou en cas de luminosité réduite, par un faisceau lumineux.

Afin d'assister la conduite du véhicule automobile, il est connu de réaliser, via une fonction du système lumineux du véhicule automobile, un marquage au sol. Le marquage au sol peut être réalisé en introduisant des zones sombres dans le faisceau lumineux du système d'éclairage, les zones sombres étant autour, ou de part et d'autre, du marquage à réaliser, l'utilisateur visualisant ainsi le marquage par contraste entre zones d'ombres et zones éclairées.

Les fonctions de marquage peuvent également être réalisées à l'arrière du véhicule automobile dans un but de signalisation pour les véhicules automobiles derrière le véhicule automobile de l'utilisateur.

Selon les solutions de l'art antérieur, les fonctions de marquage sont prédéfinies. Pourtant, chaque conducteur a des préférences de conduite, des préférences relatives au marquage et/ou des capacités visuelles totalement différentes, si bien qu'il serait préférable de pouvoir personnaliser de telles fonctions de marquage.

La présente invention vient améliorer la situation.

Un premier aspect de l'invention concerne un procédé de personnalisation d'au moins un paramètre d'une fonction de marquage au sol d'un système lumineux d'un véhicule automobile, le procédé comprenant les étapes suivantes :
- pilotage du système lumineux à partir d'une valeur initiale d'au moins un paramètre d'une fonction de marquage au sol ;
- affichage d'une interface graphique pour le contrôle du paramètre de la fonction de marquage au sol ;
- sur réception d'une commande de modification du paramètre, via l'interface graphique par exemple, adaptation en temps réel du pilotage de la fonction de marquage au sol en fonction de la commande de modification.

On entend par « *marquage au sol »* toute signalisation routière tracée sur une route. Par exemple un marquage peut correspondre à une marque longitudinale telle qu'une ligne continue ou une ligne discontinue de guidage, délimitant la route en vue de guider la circulation.

On entend par « *adaptation en temps réel »* le fait de modifier le pilotage du système lumineux en faisant varier le paramètre de la fonction de marquage au sol, durant la réception de la commande de modification. Une telle commande de modification peut être progressive, ou non-instantanée, par exemple dans le cas un utilisateur déplace un curseur sur une interface graphique. La commande de modification peut en variante être incrémentale, afin de modifier le paramètre de la valeur initiale à une valeur différente.

Une telle adaptation en temps réel permet avantageusement à un utilisateur de personnaliser la fonction de marquage au sol avec une précision élevée, puisqu'il dispose d'un retour direct sur la modification qu'il apporte au paramètre de la fonction de marquage au sol.

Selon un mode de réalisation, le procédé peut comprendre en outre, suite à la réception de la commande de modification, une étape de validation via l'interface graphique de la commande de modification.

Ce mode de réalisation permet d'éviter une erreur de saisie de commande de modification via l'interface graphique par un utilisateur.

En complément, le procédé peut comprendre en outre, suite à la validation de la commande de modification, une étape de stockage du paramètre modifié en fonction de la commande de modification.

Ce mode de réalisation permet avantageusement d'éviter de répéter la personnalisation à chaque activation du système lumineux ou de la fonction de marquage au sol.

Dans un mode de réalisation, le procédé peut comprendre en outre une étape de sélection, via l'interface graphique, de la fonction de marquage au sol parmi une pluralité de fonctions de marquage au sol.

Il est ainsi rendu possible de personnaliser plusieurs fonctions de marquage au sol via la même interface graphique.

En complément, le procédé peut comprendre en outre, suite à la sélection de la fonction de marquage au sol, l'affichage du paramètre ou des paramètres de la fonction de marquage au sol sélectionnée.

Selon un mode de réalisation, le procédé peut comprendre en outre une étape de téléchargement d'un paramètre additionnel de la fonction de marquage au sol, le paramètre additionnel étant contrôlable par l'interface graphique affiché.

Il est ainsi possible d'enrichir la personnalisation de la fonction de marquage au sol, en tirant partie des possibilités d'accès du véhicule automobile à un réseau de données, tel qu'un réseau de télécommunications mobiles.

Selon un mode de réalisation, la commande de modification peut comprendre le déplacement d'un curseur sur l'interface graphique, le pilotage de la fonction de marquage au sol étant adapté durant le déplacement du curseur sur l'interface graphique.

La personnalisation par un utilisateur est ainsi facilitée, le pilotage du système lumineux étant adapté en temps réel pendant le déplacement du curseur.

Selon un mode de réalisation, la fonction de marquage au sol peut être une fonction de marquage de ligne au sol et peut comprendre au moins l'un parmi les paramètres suivants :
- une distance entre le véhicule automobile et un début de ligne;
- une longueur de ligne ;
- une largeur de ligne ;
- une inclinaison entre les deux lignes, lorsque deux lignes sont marquées au sol ;
- un type de ligne; et
- une image de ligne.

Ce mode de réalisation permet d'assister la conduite du véhicule, personnaliser cette assistance en fonction du conducteur et d'améliorer la sécurité, notamment en cas de visibilité réduite.

Selon un mode de réalisation, la fonction de marquage au sol est une fonction d'assistance GPS comprenant un marquage au sol incluant une flèche, la fonction d'assistance GPS comprenant au moins l'un parmi les paramètres suivants :
- un type de flèche;
- une distance entre la flèche et le véhicule automobile ;
- une position latérale de la flèche ; et
- une inclinaison de la flèche.

Un tel mode de réalisation permet d'améliorer la conduite du véhicule par l'utilisateur et la sécurité associé en ce que l'utilisateur peut rester concentrer sur la route durant la consultation des indications de direction.

Selon un mode de réalisation, la fonction de marquage au sol peut être une fonction anti-collision et peut comprendre au moins l'un parmi les paramètres suivants :
- un temps intervéhicule ;
- lorsque le marquage au sol est matérialisé sous la forme d'une barre horizontale, une longueur de la barre horizontale; et
- une largeur de la barre horizontale.

Un tel mode de réalisation permet d'améliorer la sécurité associée à la conduite du véhicule.

Un deuxième aspect concerne un programme informatique comportant des instructions pour la mise en oeuvre des étapes du procédé selon le premier aspect de l'invention, lorsque ces instructions sont exécutées par un processeur.

Un troisième aspect concerne un support pour le stockage d'un programme informatique comportant des instructions pour la mise en oeuvre des étapes du procédé selon le premier aspect de l'invention, lorsque ces instructions sont exécutées par un processeur.

Un quatrième aspect de l'invention concerne un dispositif de pilotage d'un système lumineux d'un véhicule automobile, le dispositif comprenant un processeur configuré pour :
- piloter le système lumineux à partir d'une valeur initiale d'au moins un paramètre d'une fonction de marquage au sol ;
- communiquer avec une interface graphique pour le contrôle du paramètre de la fonction de marquage au sol via une interface;
- sur réception d'une commande de modification du paramètre via l'interface, adapter en temps réel le pilotage de la fonction de marquage au sol en fonction de la commande de modification.

Un cinquième aspect de l'invention concerne un véhicule automobile comprenant un système lumineux et un dispositif de pilotage du système lumineux selon le quatrième aspect de l'invention.

D'autres caractéristiques et avantages de l'invention apparaîtront à l'examen de la description détaillée ci-après, et des dessins annexés sur lesquels:
- la figure 1 illustre un système de personnalisation d'une fonction de marquage au sol d'un système lumineux de véhicule automobile, selon un mode de réalisation de l'invention;
- la figure 2 est un diagramme illustrant les étapes d'un procédé selon un mode de réalisation de l'invention ;
- la figure 3 présente une interface graphique pour le contrôle d'un paramètre d'une fonction de marquage au sol selon un mode de réalisation de l'invention;
- la figure 4 illustre de manière détaillée un dispositif de pilotage selon un mode de réalisation de l'invention.

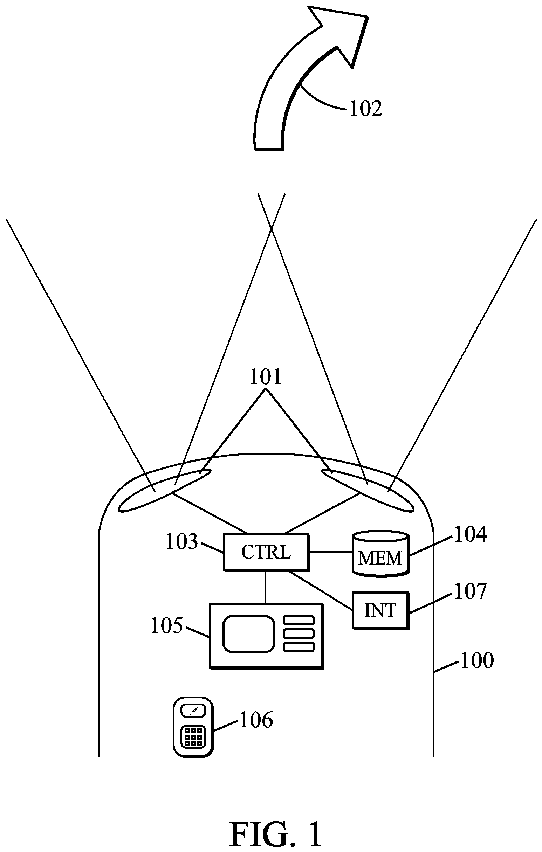

La figure 1 illustre un véhicule automobile 100 configuré pour la personnalisation de paramètres d'une fonction de marquage au sol d'un système lumineux 101 du véhicule automobile 100, selon un mode de réalisation de l'invention. Comme indiqué précédemment, le système lumineux peut intégrer des projecteurs, tels que des phares avant comme représenté de manière illustrative et non restrictive sur la figure 1. En effet, le système lumineux réalisant la fonction de marquage peut comprendre de manière alternative, ou en complément, des phares arrière du véhicule automobile 100.

Afin de réaliser la fonction de marquage au sol, le système lumineux peut être un système de type « Picture Beam Digital Micromirror Device » ou « Picture Beam DMD », en anglais, qui est bien connu et qui ne sera pas développé davantage dans la présente description. Le système lumineux 101 selon l'invention recouvre cependant tout système lumineux capable de réaliser une fonction de marquage au sol.

Le véhicule automobile 100 comprend un dispositif de pilotage 103 configuré pour piloter le système lumineux en particulier pour piloter les fonctions de marquage au sol du système lumineux. A cet effet, le dispositif de pilotage 103 peut faire varier dynamiquement des paramètres des fonctions de marquage qui seront détaillés ultérieurement.

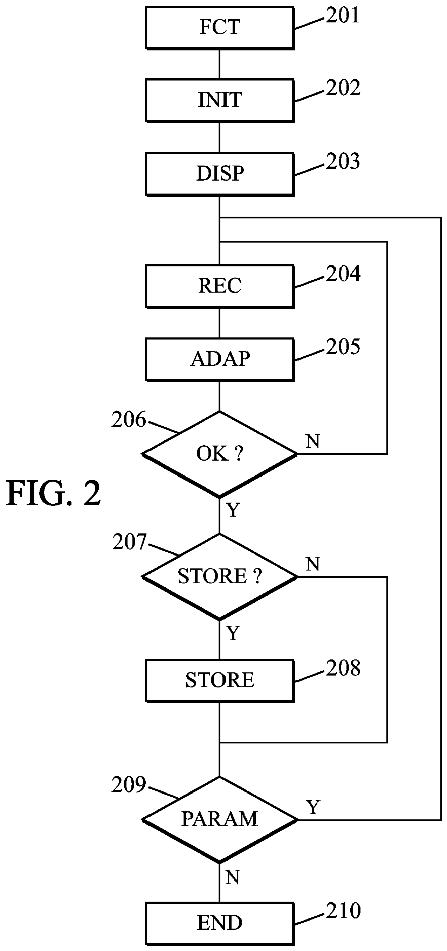

Le dispositif de pilotage 103 peut comprendre un processeur configuré pour mettre en oeuvre les étapes du procédé qui sera ultérieurement décrit en référence à la figure 2.

Le dispositif de pilotage 103 peut être relié à une mémoire 104 constituant un espace de stockage, afin de stocker, par exemple, des paramètres définis par un ou plusieurs utilisateurs, comme il sera mieux compris à la lecture de ce qui suit.

Le dispositif de pilotage 103 peut en outre être relié à une interface réseau 107, telle qu'une interface réseau sans fil apte à accéder à un réseau de données sans fil, tel qu'un réseau de télécommunications mobiles de données, de type 3G, 4G ou d'une génération ultérieure.

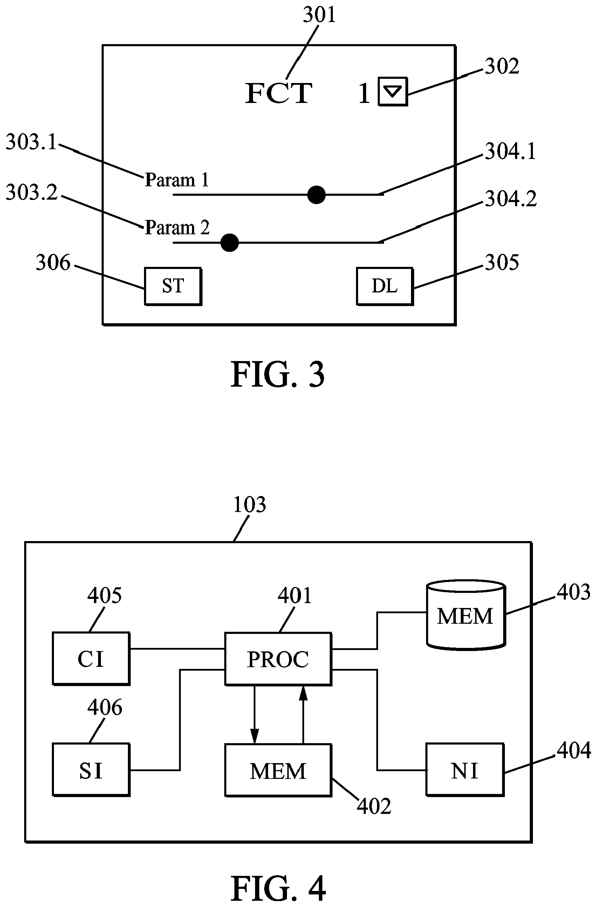

En outre, le dispositif de pilotage 103 est apte à communiquer avec une interface graphique dédiée au contrôle d'un paramètre d'une fonction de marquage au sol. L'interface graphique sera décrite davantage en référence à la figure 3.

Selon un premier mode de réalisation, l'interface graphique est affichée par un ordinateur de bord 105 du véhicule automobile. Selon ce premier mode de réalisation, l'ensemble des éléments du système sont donc intégrés dans le véhicule automobile 100, qui peut ainsi stocker, dans la mémoire 104, un logiciel dédié à la personnalisation de paramètres de fonction de marquage au sol. En variante, le logiciel dédié peut avoir été téléchargé depuis l'interface réseau 107 et stocké dans la mémoire 104.

Dans le premier mode de réalisation, l'utilisateur du véhicule automobile 100 peut faire varier les paramètres d'une fonction de marquage au sol directement via l'interface graphique de l'ordinateur de bord 105. Afin de permettre des saisies utilisateurs, l'ordinateur de bord peut comprendre un écran tactile, ou alternativement un ensemble de boutons ou un clavier. Une commande de modification d'un paramètre saisie par l'utilisateur sur l'ordinateur de bord 105 peut être directement transmise au dispositif de pilotage 103 par une interface filaire par exemple.

Selon un deuxième mode de réalisation, l'interface graphique est affichée sur un terminal mobile 106 de l'utilisateur, tel qu'un téléphone mobile de type Smartphone, une tablette tactile ou un ordinateur portable par exemple.

L'interface graphique peut être générée par une application dédiée à la personnalisation des paramètres de fonction(s) de marquage au sol, application ayant par exemple été téléchargée au préalable sur le terminal mobile 106.

Dans le deuxième mode de réalisation, une commande de modification d'un paramètre saisie par l'utilisateur peut être transmise au dispositif de pilotage 103. A cet effet, le terminal mobile 106 peut accéder, via l'application dédiée, au dispositif de pilotage 103 via le réseau de télécommunications mobiles de données. En variante, un réseau local de type Wi-fi peut être créé par le dispositif de pilotage 103 et le terminal 106 peut ainsi communiquer avec le dispositif de pilotage 103 via le réseau local.

Dans un but illustratif, un marquage au sol 102 de type *« flèche* » a été représenté sur la figure 1. L'invention n'est toutefois aucunement restreinte à des marquages au sol sous forme d'images donnant des indications de direction, fonction de marquage au sol appelée fonction d'informations GPS, pour « *Global Positioning System* » en anglais. En effet, le marquage au sol peut en variante matérialiser des lignes continues ou en pointillés sur le bord et/ou au milieu de la route ou des lignes courbes pour marquer un virage. Une telle fonction est appelée fonction de marquage de ligne. En variante, une fonction de marquage au sol peut matérialiser une barre représentant un temps interdistance avec un véhicule suivi. Une telle fonction est appelée fonction anti-collision avant. Aucune restriction n'est ainsi attachée au type de marquage au sol projeté par le système lumineux 101.

En variante, lorsque le marquage au sol est réalisé par des phares arrière du véhicule, il peut représenter une barre représentant un temps interdistance avec le véhicule de derrière, un pictogramme indiquant un danger, une ligne courbe indiquant un virage, etc.

La figure 2 est un diagramme illustrant les étapes d'un procédé de personnalisation selon un mode de réalisation de l'invention.

A une étape 201, une fonction de marquage au sol peut être sélectionnée, par exemple automatiquement suite au démarrage du véhicule automobile 100 ou suite à l'activation d'un bouton tactile ou mécanique par l'utilisateur du véhicule automobile. La fonction de marquage peut être sélectionnée parmi plusieurs fonctions de marquage qui peuvent être réalisées par le système lumineux 101, telles que les fonctions d'informations GPS, anti-collision avant, de marquage de ligne, etc.

A une étape 202, le dispositif de pilotage 103 pilote le système lumineux 101 à partir d'une valeur initiale d'au moins un paramètre de la fonction de marquage au sol. Si la fonction de marquage au sol est associée à plusieurs paramètres, une valeur initiale est obtenue par le dispositif de pilotage 103 pour chacun des paramètres de la fonction de marquage au sol. Les valeurs initiales peuvent être stockées dans la mémoire 104 et peuvent être prédéterminées, par exemple par le constructeur du véhicule automobile. En variante, les valeurs initiales peuvent avoir été téléchargées via l'interface réseau 107.

A une étape 203, une interface graphique est affichée sur le terminal mobile 106 ou sur l'ordinateur de bord 105, selon le mode de réalisation considéré, l'interface graphique permettant le contrôle d'au moins un paramètre de la fonction de marquage au sol sélectionnée à l'étape 201. L'affichage peut être contrôlé par le dispositif de pilotage 103 ou par un serveur distant associé à l'interface graphique ou peut être mis en oeuvre de manière autonome par l'interface graphique.

A une étape 204, une commande de modification du paramètre est reçue via l'interface graphique et transférée en temps réel au dispositif de pilotage 103.

A une étape 205, le dispositif de pilotage 103 adapte en temps réel le pilotage de la fonction de marquage au sol en fonction de la commande de modification.

Aucune restriction n'est attachée à la commande de modification. Par exemple, la commande de modification peut consister en la saisie d'une valeur numérique par l'utilisateur. Sur saisie de cette valeur, le dispositif de pilotage 103 pilote le système lumineux 101 de manière à faire passer le paramètre de sa valeur initiale à la valeur numérique entrée par l'utilisateur. En variante, la commande de modification peut consister à faire varier un curseur, de manière progressive, et ainsi, le dispositif de pilotage 103 fait varier en temps réel la valeur du paramètre auprès du système lumineux 101, en fonction de la position du curseur.

Ainsi, la personnalisation, ou paramétrage, par l'utilisateur est facilitée par l'adaptation en temps réel du pilotage de la fonction de marquage au sol, en ce que l'utilisateur a un retour direct sur sa manipulation de l'interface graphique.

Par exemple, si le paramètre de la fonction de marquage est un niveau de contraste, et que l'utilisateur fait varier le niveau de contraste via l'interface graphique de la valeur initiale k0 à une valeur supérieure k1, le dispositif de pilotage 103 adapte en temps réel le niveau de contraste du marquage au sol projeté par le système de manière à ce que le contraste du marquage au sol varie entre k0 et k1.

Aucune restriction n'est attachée aux paramètres considérés. Ci-après des paramètres des fonctions de marquage au sol précédemment évoquées sont donnés à titre illustratif uniquement.

Dans l'exemple d'une fonction de marquage au sol de type marquage de lignes, les paramètres de la fonction peuvent comprendre l'un au moins parmi:
- une distance entre le véhicule automobile 100 et un début de ligne. On appelle début de ligne la partie de la ligne la plus proche du véhicule automobile 100 ;
- une longueur de ligne ;
- une largeur de ligne ;
- une inclinaison entre les deux lignes, lorsque deux lignes sont marquées au sol.

Une telle inclinaison correspond à une rotation appliquée aux lignes dans le but de les faire converger. Le fait de ne pas appliquer d'inclinaison conduit à obtenir deux lignes parallèles. A contrario, une inclinaison de valeur élevée correspond à une convergence rapide des lignes, à faible distance du véhicule, par exemple à 50 mètres. Le point de rotation des lignes est préférablement pris comme point de début de la ligne.
- un type de ligne. On entend par type de ligne le fait que la ligne soit une ligne continue ou une ligne en pointillés par exemple;
- une image de ligne. On entend par image de ligne l'aspect de la ligne tel qu'un motif de la ligne ou une couleur de la ligne.

Une telle fonction permet de guider un conducteur du véhicule automobile 100 dans des situations de circulation difficiles, tel qu'en situation de brouillard par exemple.

Dans l'exemple d'une fonction d'informations GPS, comprenant notamment le marquage au sol de flèches, les paramètres de la fonction peuvent comprendre l'un au moins parmi :
- un type de flèche, comprenant notamment sa forme ;
- une distance entre la flèche et le véhicule automobile 100 ;
- la position latérale de la flèche, soit sa position sur la largeur de la route ;
- l'inclinaison de la flèche.

Une telle fonction permet d'améliorer la conduite du conducteur sans nécessiter qu'il consulte un écran dans le véhicule, ce qui améliore également la sécurité.

Dans l'exemple d'une fonction anti-collision, les paramètres de la fonction peuvent comprendre l'un au moins parmi:
- un temps intervéhicule ;
- la longueur de la barre horizontale, lorsque le marquage au sol est matérialisé sous la forme d'une barre horizontale ;
- la largeur de la barre horizontale.

Une telle fonction permet, comme expliquer ci-avant, d'informer le conducteur du véhicule automobile 100 du temps interdistance avec la voiture suivie.

Une fois le paramètre adapté, l'interface graphique peut requérir une confirmation de l'utilisateur pour verrouiller le paramètre modifié de pilotage de la fonction de marquage au sol. La réponse de l'utilisateur est reçue et transférée à une étape 206 au dispositif de pilotage 103.

Dans le cas où l'utilisateur ne confirme pas la modification du ou des paramètres, le procédé retourne à l'étape 204 jusqu'à réception d'une nouvelle commande de modification de la part de l'utilisateur.

Dans le cas où l'utilisateur confirme la modification des paramètres, l'interface graphique peut recevoir ou non une instruction de stockage des paramètres modifiés à une étape 207.

En cas de réception d'une instruction de stockage des paramètres modifiés, l'instruction de stockage est transmise au dispositif de pilotage 103 qui stocke, à une étape 208, les paramètres modifiés dans la mémoire 104 ou sur un serveur distant via l'interface réseau 107.

A une étape 209, l'interface graphique propose à l'utilisateur de modifier un autre ou d'autres paramètres. Afin de proposer un tel choix, l'interface graphique peut afficher une fenêtre posant la question « *souhaitez-vous modifier d'autres paramètres »* et affichant deux boutons « *oui* » et « *non* », ou peut simplement continuer à afficher l'ensemble des paramètres de la fonction de marquage au sol, comme il sera détaillé ultérieurement en référence à la figure 3.

Si l'utilisateur souhaite modifier d'autres paramètres, le procédé retourne à l'étape 204 jusqu'à réception d'une nouvelle commande de modification.

Dans le cas contraire, le procédé s'achève à l'étape 210. A cet effet, l'interface graphique dédiée à la personnalisation de paramètres peut être remplacée par un menu plus général.

La figure 3 représente une interface graphique pour le contrôle de paramètres de la fonction de marquage au sol, selon un mode de réalisation de l'invention.

L'interface graphique peut indiquer un identifiant 301 de la fonction de marquage au sol. Un bouton 302 peut permettre de présenter l'ensemble des fonctions de marquage au sol accessibles selon l'invention. Par exemple, sur sélection du bouton 302 un menu défilant peut être affiché en superposition pour la sélection de l'une des fonctions.

Une fois la fonction sélectionnée, l'ensemble ou une partie des paramètres associés à la fonction sélectionnées sont identifiés par des identifiants 303.1 et 303.2. Deux paramètres sont représentés à titre illustratif sur la figure 3. Toutefois, l'invention s'applique à n'importe quel nombre de paramètres (supérieur ou égal à un).

En association avec chaque paramètre identifié, l'interface graphique peut afficher un moyen pour l'utilisateur d'entrer une commande de modification. Un tel moyen peut être des curseurs respectifs 304.1 et 304.2 pouvant varier entre des valeurs extrêmes des paramètres auxquels elles sont associées.

L'utilisateur peut faire varier de manière progressive ou incrémentale les curseurs 304.1 et 304.2 entre la valeur initiale et la valeur finale, c'est-à-dire celle que choisit finalement l'utilisateur. Afin d'améliorer la précision de la personnalisation, et comme détaillé ci-avant, le dispositif de pilotage 103 pilote le système d'éclairage 101 en temps réel pendant la réception de la commande de modification.

En lieu et place des curseurs 304.1 et 304.2, l'interface graphique peut alternativement afficher des fenêtres permettant à l'utilisateur d'entrer directement une valeur numérique, sans déplacer de curseur.

En complément, l'interface graphique peut afficher un bouton 305 constituant un lien vers un serveur distant et permettant de télécharger un ou des paramètres additionnels de la fonction sélectionnée ou une fonction de marquage au sol additionnelle. Dans le cas où l'interface graphique est affichée sur le terminal mobile 106, les paramètres additionnels téléchargés ou la fonction additionnelle peuvent être installés et stockés dans le terminal mobile 106 ou dans la mémoire 104 du véhicule automobile. Dans le cas où l'interface graphique est affichée sur le terminal mobile 106, les paramètres additionnels téléchargés ou la fonction additionnelle peuvent être installés et stockés dans la mémoire 104 du véhicule automobile.

Un bouton 306 optionnel peut en outre permettre d'activer le stockage du ou des paramètres modifiés conformément à l'étape 208 décrite précédemment.

Par exemple, dans le cas de la fonction d'informations GPS, de nouvelles images peuvent être téléchargées, telles que des formes différentes de flèches.

La figure 4 présente un dispositif de pilotage 103 selon un mode de réalisation de l'invention.

Le dispositif de pilotage 103 comprend une mémoire vive 402 et un processeur 401 pour stocker des instructions permettant la mise en oeuvre des étapes du procédé décrit ci-avant. Le dispositif de pilotage comporte aussi optionnellement une mémoire 403 pour le stockage de données destinées à être conservées après l'application du procédé. Ainsi, les données décrites ci-avant peuvent alternativement être stockées dans la mémoire 403 ou dans la mémoire 104 du véhicule automobile illustrée en référence à la figure 1. Alternativement, les mémoires 104 et 403 peuvent être confondues.

Le dispositif de pilotage 103 comporte en outre une interface réseau 404 apte à communiquer avec un réseau de communications mobiles de données. L'interface réseau 404 peut être confondue avec l'interface réseau 107 du véhicule automobile ou ces entités peuvent être distinctes. L'interface réseau 404 permet l'accès à des serveurs distant, permet de contrôler l'interface graphique sur le terminal mobile 106 via un tel serveur distant, et permet de télécharger des fonctions de marquage au sol et/ou des paramètres de fonctions de marquage au sol supplémentaires.

Le dispositif de pilotage 103 peut comprendre en outre une interface de pilotage 406 reliée au système d'éclairage du véhicule automobile, ainsi qu'une interface de commande 405 de l'interface graphique de l'ordinateur de bord 105.

Bien entendu, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de réalisation décrits précédemment.

## Revendications

1. Procédé de personnalisation d'au moins un paramètre d'une fonction de marquage au sol d'un système lumineux (101) d'un véhicule automobile (100), le procédé comprenant les étapes suivantes :
- pilotage (202) du système lumineux à partir d'une valeur initiale d'au moins un paramètre d'une fonction de marquage au sol ;
- affichage (203) d'une interface graphique pour le contrôle du paramètre de la fonction de marquage au sol ;
- sur réception (204) d'une commande de modification du paramètre, adaptation (205) en temps réel du pilotage de la fonction de marquage au sol en fonction de la commande de modification.

2. Procédé selon la revendication 1, comprenant en outre, suite à la réception (204) de la commande de modification, une étape de validation (206) via l'interface graphique de la commande de modification.

3. Procédé selon la revendication 2, comprenant en outre, suite à la validation de la commande de modification, une étape de stockage (208) du paramètre modifié en fonction de la commande de modification.

4. Procédé selon l'une des revendications précédentes, comprenant en outre une étape de sélection (201), via l'interface graphique, de la fonction de marquage au sol parmi une pluralité de fonctions de marquage au sol.

5. Procédé selon la revendication 4, comprenant en outre, suite à la sélection de la fonction de marquage au sol, l'affichage (203) du paramètre ou des paramètres de la fonction de marquage au sol sélectionnée.

6. Procédé selon l'une des revendications précédentes, comprenant en outre une étape de téléchargement d'un paramètre additionnel de la fonction de marquage au sol, le paramètre additionnel étant contrôlable par l'interface graphique affiché.

7. Procédé selon l'une des revendications précédentes, dans lequel la commande de modification comprend le déplacement d'un curseur (304.1 ; 304.2) sur l'interface graphique, le pilotage de la fonction de marquage au sol étant adapté durant le déplacement du curseur sur l'interface graphique.

8. Procédé selon l'une des revendications précédentes, dans lequel la fonction de marquage au sol est une fonction de marquage de ligne au sol et comprend au moins l'un parmi les paramètres suivants :
- une distance entre le véhicule automobile (100) et un début de ligne;
- une longueur de ligne ;
- une largeur de ligne ;
- une inclinaison entre les deux lignes, lorsque deux lignes sont marquées au sol ;
- un type de ligne; et
- une image de ligne.

9. Procédé selon l'une des revendications précédentes, dans lequel la fonction de marquage au sol est une fonction d'assistance GPS comprenant un marquage au sol (102) incluant une flèche, la fonction d'assistance GPS comprenant au moins l'un parmi les paramètres suivants :
- un type de flèche;
- une distance entre la flèche et le véhicule automobile (100) ;
- une position latérale de la flèche ; et
- une inclinaison de la flèche.

10. Procédé selon l'une des revendications précédentes, dans lequel la fonction de marquage au sol est une fonction anti-collision et comprend au moins l'un parmi les paramètres suivants :
- un temps intervéhicule ;
- lorsque le marquage au sol est matérialisé sous la forme d'une barre horizontale, une longueur de la barre horizontale; et
- une largeur de la barre horizontale.

11. Programme informatique comportant des instructions pour la mise en oeuvre des étapes du procédé selon l'une des revendications précédentes, lorsque ces instructions sont exécutées par un processeur.

12. Support pour le stockage d'un programme informatique comportant des instructions pour la mise en oeuvre des étapes du procédé selon l'une des revendications 1 à 10, lorsque ces instructions sont exécutées par un processeur.

13. Dispositif de pilotage d'un système lumineux (101) d'un véhicule automobile (100), le dispositif comprenant un processeur (401) configuré pour :
- piloter (202) le système lumineux à partir d'une valeur initiale d'au moins un paramètre d'une fonction de marquage au sol ;
- communiquer avec une interface graphique pour le contrôle du paramètre de la fonction de marquage au sol via une interface (404 ; 405);
- sur réception (204) d'une commande de modification du paramètre via l'interface (404, 405), adapter (205) en temps réel le pilotage de la fonction de marquage au sol en fonction de la commande de modification.

14. Véhicule automobile (100) comprenant un système lumineux (101) et un dispositif de pilotage (103) du système lumineux selon la revendication 13.
